# FASCICULE DE BREVET EUROPEEN

(11) **EP 1 045 181 B1**
(45) Date de publication et mention de la délivrance du brevet: **14.07.2004**
(21) Numéro de dépôt: 99490011.6
(22) Date de dépôt: 15.04.1999
(51) Int. Cl.: F16K 17/12

(54) **Clapet à volet pivotant et installation pourvue du dit clapet**
Schwenkbare Klappe und Einrichtung mit einer solchen Klappe
Pivoting disc and installation using said disc

(43) Date de publication de la demande: 18.10.2000
(73) Titulaire: Promat Air, S.A., 59242 Templeuve (FR)
(72) Inventeur: Boutry, François Xavier, 59613 Villeneuve D'Ascq (FR)

(56) Documents cités:
- US-A- 1 480 942
- US-A- 1 584 760
- US-A- 3 710 821

## Description

L'invention se rapporte à un clapet à volet pivotant.

Elle se rapporte également à l'installation pourvue du dit clapet et notamment une installation de production d'air conditionné.

L'air produit au niveau d'une installation de production d'air conditionné doit, pour être acheminé vers les différents locaux, sortir de l'installation de production avec une pression suffisante pour parvenir dans chaque local avec un débit suffisant.

Le fonctionnement de ces installations est piloté à l'aide de capteurs qui mesurent, d'une part, la température dans chacune des pièces de l'immeuble et, d'autre part, la pression en certains points des conduites de distribution.

Les valeurs mesurées par ces différents capteurs commandent l'installation en augmentant ou ralentissant la production d'air conditionné.

Un tel environnement technique devrait éviter tous risques de surpression au niveau de l'installation.

Malheureusement, ce n'est pas le cas et il se produit des accidents qui ont pour conséquence la destruction d'une partie de l'installation.

On connaît des clapets comprenant :
- un volet pivotant autour d'un axe parallèle au plan du volet, lequel est mobile entre une position dite de fermeture dans laquelle l'une des deux faces du volet dite face d'obturation ferme un passage d'évacuation de la surpression et une position d'ouverture et
- un moyen de maintien du volet en position de fermeture développant une force prédéterminée s'opposant à la force développée par la pression sur la face d'obturation.

Ce moyen de maintien consiste généralement en un ressort taré, de sorte que le volet ne s'ouvre que progressivement.

L'efficacité d'un tel système est insuffisante.

On connaît un clapet (US-A-1.480.942 et US-1.584.760) pour fluide où le moyen de maintien est constitué par une masse portée par un levier.

Ces clapets ne conviennent aucunement à un système véhiculant de l'air car ils ne sont pas suffisamment sensibles.

L'invention a pour objectif notamment d'améliorer un tel système et, à cet effet, l'invention a pour objet un clapet du type précité comprenant :
- un volet pivotant autour d'un axe parallèle au plan du volet, lequel volet est mobile entre une position dite de fermeture dans laquelle l'une des deux faces dudit volet dite face d'obturation ferme un passage d'évacuation de la surpression et une position d'ouverture et
- un moyen de maintien du volet en position de fermeture développant une force prédéterminée s'opposant à la force développée par la pression sur la face d'obturation.
ce clapet étant caractérisé en ce que :
- la face d'obturation du volet porte une jupe qui s'étend vers le siège du clapet en coopérant avec la périphérie du dit siège et cette jupe a une hauteur prédéterminée permettant au clapet de s'écarter de sa position initiale d'une valeur déterminée tout en maintenant l'étanchéité, et
- le moyen de maintien comprend une masse qui, mobile par rapport au volet, se déplace d'une position initiale vers une position dite désamorcée lorsque le volet passe de sa position fermée vers sa position ouverte pour modifier le centre de gravité du volet et, dans le sens de fonctionnement précité, en diminuant la force qu'exerce ce moyen.

L'invention a également pour objet l'installation pourvue dudit clapet.

L'invention sera bien comprise à l'aide de la description ci-après faite, à titre d'exemple non limitatif, en regard du dessin ci-annexé qui représente :
- figure 1 : vue de face d'un clapet,
- figure 2 : vue de coté d'une installation pourvue d'un clapet,

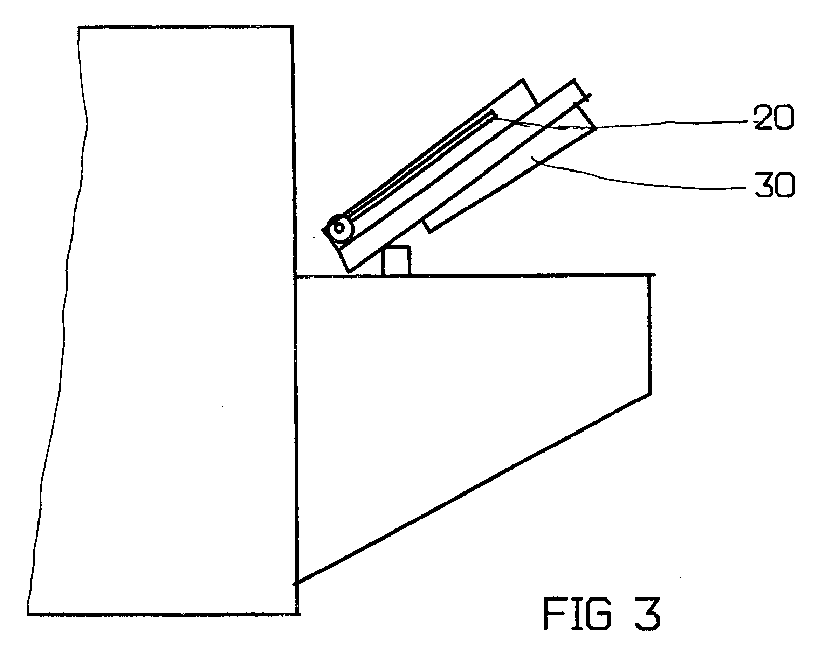

- figure 3 : vue de côté d'une installation pourvue d'une variante de clapet.

En se reportant au dessin, on voit que pour éviter une surpression ou une trop forte dépression, dans une installation 1 notamment de production d'air conditionnée, cette installation comprend un clapet 2.

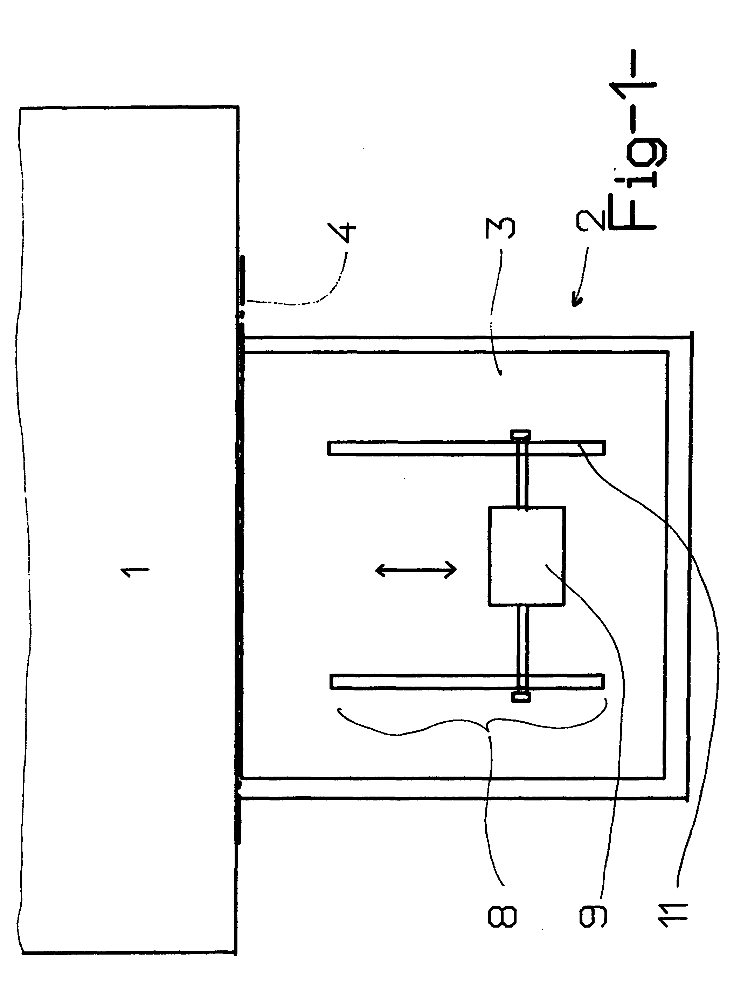

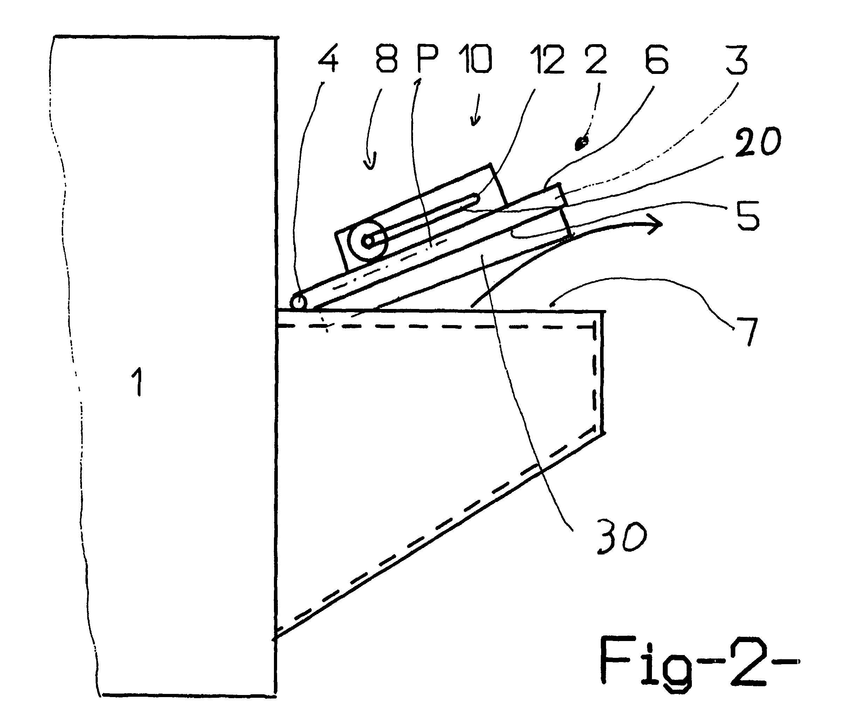

Classiquement, ce clapet 2, par exemple, de surpression, comprend :
- un volet 3 pivotant autour d'un axe 4 parallèle au plan P du volet, lequel volet est mobile entre une position dite de fermeture (figure 1) dans laquelle l'une 5 des deux faces 5,6 dudit volet dite face 5 d'obturation ferme un passage 7 d'évacuation de la surpression et une position d'ouverture (figure 2) et
- un moyen 8 de maintien du volet en position de fermeture développant une force prédéterminée s'opposant à la force développée par la pression sur la face 5 d'obturation.

Le moyen 8 de maintien développe une force qui diminue lorsque le volet passe de la position de fermeture vers la position d'ouverture et, de ce fait, l'ouverture du clapet est moins freinée et se fait donc plus rapidement et son retour en position fermée ne se réalise que lorsque la pression, à l'intérieur de l'installation, est largement inférieure à la pression de consigne dans le cas d'un clapet de surpression et, invesement, dans le cas d'un clapet de dépression.

Dans une forme de réalisation préférée, le moyen 8 de maintien comprend une masse 9 qui, mobile par rapport au volet, se déplace d'une position initiale vers une position dite désamorcée lorsque le volet passe de sa position fermée vers sa position ouverte.

Ce déplacement de la masse modifie donc le couple nécessaire au déplacement du volet en modifiant le centre de gravité dudit volet.

En position de fermeture, le volet est sensiblement dans un plan horizontal avec sa face 5 d'obturation tournée vers le bas et son autre face 6 dite face de commande portant la masse 9 qui se déplace entre un point éloigné de l'axe de rotation du volet et un point plus proche de cet axe de rotation.

La face dite d'obturation porte une jupe 30 qui s'étend vers le siège du clapet en coopérant avec la périphérie du dit siège et cette jupe a une hauteur prédéterminée permettant au clapet de s'écarter de sa position initiale d'une valeur déterminée tout en maintenant l'étanchéité.

Le bord inférieur de la jupe sera incliné par rapport au plan du clapet avec la hauteur de la jupe augmentant en s'éloignant de l'axe de rotation du clapet.

Cette disposition résoud le problème du pompage.

En effet, en cas de surpression, celle-ci provoque le déplacement du volet.

Dans le cas où il n'y aurait pas de jupe, de l'air s'échappe tout de suite avant que le volet n'ait le temps de s'ouvrir complètement et la pression redescend légèrement à une valeur voisine de la consigne.

De ce fait, le phénomène recommence immédiatement.

Par contre, en présence de la jupe, le volet peut s'écarter de sa position initiale même si la valeur de consigne est légèrement dépassée mais, au delà d'un déplacement angulaire du volet fonction de la hauteur de la jupe, l'étanchéité étant toujours maintenue, la masse mobile a commencé son déplacement devenant momentanément irréversible et provoquant ainsi le déplacement total du volet.

La surpression peut alors être largement évacuée, le système fonctionnant de manière similaire avec un système contrôlant la dépression.

Cette face de commande porte un moyen 10 de guidage en translation de la masse mobile.

Le moyen de guidage s'étendra de préférence de part et d'autre de l'axe de rotation du volet.

Selon le cheminement qu'impose à la masse mobile, ce moyen 10 de guidage, la force d'application du volet évoluera différemment.

Dans une forme avantageusement de réalisation, la masse 9 est portée par un axe 11 qui la traverse et dont les extrémités sont chacune guidées dans une lumière 12.

La masse mobile et son moyen de guidage comprennent un moyen de rappel de la dite masse en sa position initiale.

A cet effet, par exemple, le plan 20 d'appui sur lequel circule la masse mobile est, par rapport au plan horizontal défini par le volet en position fermée, légèrement incliné vers le bas depuis la position désamorcée vers la position initiale, de sorte que lorsque le volet revient en sa position fermée, c'est le propre poids de la masse mobile qui réarme le système.

Au lieu d'une masse, le dispositif comprend deux masses chacune portée à l'une des extrémités de l'axe 11.

## Revendications

1. Clapet (2) comprenant :
- un volet (3) pivotant autour d'un axe (4) parallèle au plan (P) du volet, lequel volet est mobile entre une position dite de fermeture dans laquelle l'une (5) des deux faces (5,6) dudit volet dite face (5) d'obturation ferme un passage (7) d'évacuation de la surpression et une position d'ouverture et
- un moyen (8) de maintien du volet en position de fermeture développant une force prédéterminée s'opposant à la force développée par la pression sur la face (5) d'obturation,
ce clapet est **CARACTERISE en ce que** :
- la face d'obturation du volet porte une jupe (30) qui s'étend vers le siège du clapet en coopérant avec la périphérie du dit siège et cette jupe a une hauteur prédéterminée permettant au clapet de s'écarter de sa position initiale d'une valeur déterminée tout en maintenant l'étanchéité et
- le moyen (8) de maintien comprend une masse (9) qui, mobile par rapport au volet, se déplace d'une position initiale vers une position dite désamorcée lorsque le volet passe de sa position fermée vers sa position ouverte pour modifier le centre de gravité du volet et, dans le sens de fonctionnement précité, en diminuant la force qu'exerce ce moyen (8).

2. Clapet selon la revendication 1 **caractérisé en ce que**, en position de fermeture, c'est la face (6) dite face de commande opposée à celle d'obturation qui porte la masse (9) qui se déplace entre un point éloigné de l'axe de rotation du volet et un point plus proche de cet axe de rotation.

3. Clapet selon la revendication 2 **caractérisé en ce que** la face de commande porte un moyen (10) de guidage en translation de la masse mobile.

4. Clapet selon la revendication 3 **caractérisé en ce que** la masse (9) est portée par un axe (11) qui la traverse et dont les extrémités sont chacune guidées dans une lumière (12).

5. Clapet selon la revendication 3 ou 4 **caractérisé en ce que** la masse mobile et son moyen de guidage comprennent un moyen de rappel de la dite masse en sa position initiale.

6. Clapet selon la revendication 5 **caractérisé en ce que** le plan (20) d'appui sur lequel circule la masse mobile est , par rapport au plan horizontal défini par le volet, légèrement en position fermée, incliné vers le bas depuis la position désamorcée vers la position initiale, de sorte que lorsque le volet revient en sa position fermée, c'est le propre poids de la masse mobile qui réarme le système.

7. Installation **caractérisée en ce qu'**elle est pourvue dudit clapet de surpression selon l'une quelconque des revendications 1 à 6.

## Patentansprüche

1. Klappventil (2), das umfasst:
- eine Klappe (3), die sich um eine Achse (4) parallel zur Fläche (P) der Klappe dreht, die beweglich ist zwischen einer geschlossenen Position, in der eine Oberfläche (5) der beiden Oberflächen (5, 6) der Klappe, die so genannte Verschließoberfläche (5), einen Durchgang (7) zum Ablassen des Überdrucks verschließt, und einer offenen Position, und
- eine Einrichtung (8), um die Klappe in der geschlossenen Position zu halten zur Entwicklung einer vorgegebenen Kraft, die der Kraft entgegenwirkt, die durch den Druck auf die Verschließoberfläche (5) ausgeübt wird,
wobei das Klappventil **dadurch gekennzeichnet ist, dass**:
- die Verschließoberfläche der Klappe eine Verkleidung (30) trägt, die sich zu dem Sitz des Klappventils hin erstreckt und kooperiert mit der Peripherie des Sitzes und dass diese Verkleidung eine vorgegebene Höhe hat, die es dem Klappventil erlaubt, sich von seiner Ausgangsposition um einen vorgegebenen Wert zu entfernen bei gleichzeitiger Aufrechterhaltung der Dichtheit und
- die Rückhalteeinrichtung (8) eine Masse (Gewicht) (9) umfasst, die (das), da sie (es) gegenüber der Klappe beweglich ist, sich von einer Ausgangs-Position in eine so genannte inaktive Position bewegt, wenn die Klappe von ihrer geschlossenen Position in ihre offene Position übergeht, um das Gravitationszentrum (den Schwerpunkt) der Klappe zu verändern, und um, im Sinne der oben genannten Funktionsweise, gleichzeitig die Kraft zu vermindern, die diese Einrichtung (8) ausübt.

2. Klappventil nach Anspruch 1, **dadurch gekennzeichnet, dass** in der geschlossenen Position die Oberfläche (6), die so genannte Steuerungsoberfläche, die der Verschließoberfläche gegenüberliegt, die Masse bzw. das Gewicht (9) trägt, die (das) zwischen einem von der Rotationsachse der Klappe entfernten Punkt und einem Punkt näher bei dieser Rotationsachse verschoben wird.

3. Klappventil nach Anspruch 2, **dadurch gekennzeichnet, dass** die Steueroberfläche eine Führungseinrichtung (10) zur Translation der beweglichen Masse trägt.

4. Klappventil nach Anspruch 3, **dadurch gekennzeichnet, dass** die Masse (9) von einer sie durchquerenden Achse (11) getragen wird, deren Enden jeweils in einem Langloch (12) geführt sind.

5. Klappventil nach Anspruch 3 oder 4, **dadurch gekennzeichnet, dass** die bewegliche Masse und ihre Führungseinrichtung eine Einrichtung zur Rückführung der Masse in ihre Ausgangsposition umfassen.

6. Klappventil nach Anspruch 5, **dadurch gekennzeichnet, dass** die Auflagefläche (20), auf der die bewegliche Masse sich bewegt (läuft), gegenüber der durch die Klappe definierten horizontalen Fläche, die leicht in der geschlossenen Position vorliegt, ab der inaktiven Position nach unten geneigt ist in Richtung auf die Ausgangsposition, sodass dann, wenn die Klappe in ihre geschlossene Position zurückkehrt, das Eigengewicht der beweglichen Masse das System zurückstellt.

7. Vorrichtung, **dadurch gekennzeichnet, dass** sie mit der Überdruck-Ventilklappe nach einem der Ansprüche 1 bis 6 ausgestattet ist.

## Claims

1. Disc (2) comprising:
- a flap (3) pivoting around a shaft (4) parallel with the plane (P) of the disc, this disc being moveable between what is called a closing position in which one (5) of the two faces (5, 6) of the said flap, called the blanking-off face (5), closes a passage (7) for clearing away the overpressure and an opening position, and
- a means (8) of holding the flap in the closing position, developing a predetermined force opposing the force developed by the pressure on the blanking-off face (5),
this disc being **CHARACTERISED in that**:
- the blanking-off face of the disc has a skirt (30) which extends towards the seat of the disc, working in conjunction with the periphery of the said seat and this skirt has a predetermined height which allows the disc to move away from its initial position by a determined amount while maintaining the sealing, and
- the holding means (8) comprises a weight (9) which, moveable in relation to the flap, moves from an initial position, called the unprimed position, when the flap passes from its closed position towards its open position to change the centre of gravity of the flap and, in the said operating direction, while reducing the force which this means (8) exerts.

2. Disc according to Claim 1, **characterised in that**, in the closing position, it is the face (6), called the operating face opposite to the blanking-off face which carries the weight (9) which moves between a point away from the axis of rotation of the flap and a point nearer to this axis of rotation.

3. Disc according to Claim 2, **characterised in that** the operating face has a means (10) of guiding the moving weight in linear movement.

4. Disc according to Claim 3, **characterised in that** the weight (9) is carried by a shaft (11) which goes through it and whose ends are each guided in a light (12).

5. Disc according to Claim 3 or 4, **characterised in that** the moving weight and its means of guiding comprise a means of returning the said weight into its initial position.

6. Disc according to Claim 5, **characterised in that** the supporting plane (20) on which the moving weight circulates is, in relation to the horizontal plane defined by the flap, slightly in the closed position, inclined downward from the unprimed position towards the initial position, so that when the flap returns to its closed position, it is the actual weight of the moveable weight which resets the system.

7. Installation **characterised in that** it is provided with the said overpressure disc according to any one of the Claims 1 to 6.
